Europäisches Patentamt

European Patent Office

Office européen des brevets

(11) Numéro de publication: **0 470 020 B1**

# FASCICULE DE BREVET EUROPEEN

(45) Date de publication de fascicule du brevet: **04.01.95**   (51) Int. Cl.6: **C07F 7/16**, B01J 23/72

(21) Numéro de dépôt: **91420283.3**

(22) Date de dépôt: **30.07.91**

(54) **Procédé et catalyseur comprenant un composé de lanthanide comme additif promoteur pour la synthèse directe du diméthyldichlorosilane.**

(30) Priorité: **31.07.90 FR 9010011**

(43) Date de publication de la demande:
**05.02.92 Bulletin  92/06**

(45) Mention de la délivrance du brevet:
**04.01.95 Bulletin  95/01**

(84) Etats contractants désignés:
**DE DK ES FR GB GR**

(56) Documents cités:
**EP-A- 0 138 678**
**EP-A- 0 194 214**

**CHEMICAL ABSTRACTS, vol. 112, no. 15, 9 avril 1990, page 677, abrégé no.138595k, Columbus, Ohio, US; &**

**CHEMICAL ABSTRACTS, vol. 110, no. 6, 6 février 1989, page 146, abrégé no.41446h, Columbus, Ohio, US; &JP-A-63 210 012 (CHISSO CORP.) 31-08-1988**

**JOURNAL OF GENERAL CHEMISTRY OF THE USSR, vol. 51, no. 5, part 2, mai 1981,page 1021, Plenum Publishing Corp.; M.G. VORONKOV et al.: "Photocatalyticeffect of yttrium chlorides and lanthanoids of the yttrium subgroup"**

(73) Titulaire: **RHONE-POULENC CHIMIE**
**25, Ouai Paul Doumer**
**F-92408 Courbevoie Cédex (FR)**

(72) Inventeur: **Plagne, Jean-Louis**
**67, rue Pasteur**
**F-67007 Lyon (FR)**
Inventeur: **Godde, Guy**
**Chemin des Tournesols**
**F-69630 Saint-Symphorien-d'Ozon (FR)**
Inventeur: **Cattoz, Roland**
**Les Gruizards**
**rue A. Sabatier 69530 Grigny (FR)**

(74) Mandataire: **Trolliet, Maurice et al**
**RHONE-POULENC CHIMIE,**
**Direction de la Propriété Industrielle,**
**Centre de Recherches des Carrières,**
**B.P. 62**
**F-69192 Saint-Fons Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

EP 0 470 020 B1

**Description**

La présente invention concerne un procédé et un catalyseur pour la synthèse directe du diméthyldichlorosilane.

Le procédé industriel de fabrication d'organochlorosilanes et en particulier de diméthyldichlorosilane dénommé par la suite DMCS est un procédé bien connu qui est décrit notamment dans le brevet des Etats-Unis d'Amérique US-A-2 380 995, ainsi que dans l'ouvrage de Walter NOLL, Chemistry and Technology of Silicones, 1968 ; édition Academic Press Inc. pages 26-41.

Selon ce procédé dit de "synthèse directe" ou "synthèse de Rochow", on fabrique directement les organochlorosilanes et, en particulier, le DMCS par réaction du chlorure de méthyle sur une masse de contact solide formée de silicium et d'un catalyseur comprenant du cuivre suivant la réaction :

$$2CH_3Cl + Si \rightarrow (CH_3)_2SiCl_2.$$

En réalité il se forme au cours de la synthèse directe d'autres produits notamment le méthyltrichlorosilane $CH_3SiCl_3$ dénommé par la suite MTCS et le triméthylchlorosilane $(CH_3)_3SiCl$ dénommé par la suite TMCS.

Il se forme également d'autres sous-produits comme par exemple $(CH_3)HSiCl_2$ et $(CH_3)_2HSiCl$ et des produits lourds qui sont des polysilanes, essentiellement des disilanes.

Parmi tous les produits obtenus par synthèse directe, le DMCS est le produit le plus recherché. Ce produit, après hydrolyse et polymérisation, permet d'obtenir des huiles et des gommes qui sont des produits de base pour la fabrication des silicones. Ainsi le DMCS sert à la préparation de résines de polyorganosiloxane, comme le décrivent les brevets des Etats-Unis d'Amérique US-A-2 258 218 à 2 258 222, à la préparation d'huiles décrites dans les brevets des Etats-Unis d'Amérique US-A-2 469 888 et 2 469 830 et à la préparation d'élastomères de polyorganosiloxane, décrits dans le brevet des Etats-Unis d'Amérique US-A-2 448 756.

Il est connu d'utiliser le cuivre ou les composés chimiques du cuivre comme catalyseur de la réaction de synthèse directe utilisé sous la forme d'un alliage ou d'un mélange mécanique avec le silicium éventuellement disposé sur un support minéral.

De façon à améliorer le rendement en DMCS, on a déjà proposé de rajouter au cuivre un système promoteur comportant un ou plusieurs additif(s). Ces additifs peuvent être : le zinc ou un halogénure de zinc (brevet US-A-2 464 033), l'aluminium (brevets US-A-2 403 370 et 2 427 605), l'étain, le manganèse, le nickel et l'argent (brevet britannique GB-A-1 207 466), le cobalt (brevet britannique GB-A-907 161), le chlorure de potassium (brevet soviétique 307 650), le phosphore ou un composé du phosphore (brevet US-A-4 602 101), l'arsenic ou un composé de l'arsenic (brevet US-A-4 762 940).

Les procédés mettant en oeuvre des systèmes promoteurs à base des additifs précités permettent certes de perfectionner le procédé de synthèse directe mais ils présentent néanmoins au moins l'un des inconvénients suivants :
- la séléctivité en DMCS évalué par le rapport pondéral moyen

$$\frac{MTCS}{DMCS}$$

et/ou par le % molaire de DMCS par rapport à la totalité des silanes obtenus demeure insuffisant ;
- le temps d'amorçage et la température d'amorçage de la réaction sont trop élevés ;
- l'activité moyenne du système catalytique dénommée également productivité, évaluée en poids des méthylchlorosilanes (MCS) obtenus par heure et par kg de silicium introduit et le taux de transformation maximum du silicium demeurent insuffisants ;
- le sytème catalytique est sensible aux impuretés ;
- la formation de sous-produits et en particulier de disilanes demeure élevée.

Dans les brevets européens EP-A-0 138 678 et EP-A-0 138 679 on décrit l'utilisation d'un catalyseur au cuivre comprenant un système promoteur amélioré qui renferme :
- 30 à 1 000 ppm (calculés en poids de métal par rapport à la masse de silicium engagée) d'au moins un métal choisi parmi l'étain et
l'antimoine
ou d'un composé à base d'étain et/ou d'antimoine,

2

- 0,05 à 2 % (calculés comme indiqué ci-avant) d'au moins un métal alcalin choisi parmi le lithium, le sodium, le potassium, le rubidium et le césium ou d'un composé à base d'un même métal alcalin,
- et éventuellement 0,1 à 3 % (calculés comme indiqué ci-avant) de zinc métallique ou d'un composé à base de zinc.

Par rapport au système promoteur ne comportant pas de métal alcalin, le système promoteur conforme aux brevets européens précités permet d'obtenir, lorsque les réactions sont mises en oeuvre dans un cas et dans l'autre cas à des températures appropriées et pendant des durées semblables conduisant à des consommations équivalents du Si engagé, au moins une augmentation sensible de la sélectivité en DMCS évaluée d'une part par le rapport pondéral moyen

$$\mathsf{\frac{MTCS}{DMCS}}$$

et d'autre part par le % molaire de DMCS par rapport à la totalité des silanes obtenus.

Cependant, malgré tout l'intérêt des catalyseurs proposés dans l'art antérieur et en particulier dans les brevets européens précités, les recherches continuent dans ce domaine car, selon les conditions de mise en oeuvre industrielle du procédé de synthèse directe, tel ou tel catalyseur peut présenter encore des inconvénients plus ou moins importants. Il est tojours intéressant de pouvoir disposer d'une gamme étendue de catalyseurs dans laquelle on pourra trouver plus sûrement le composé le mieux adapté à un besoin donné.

Un premier but de la présente invention est de proposer un procédé et un nouveau catalyseur pour la mise en oeuvre du procédé de synthèse directe qui est différent du catalyseur décrit dans les brevets européens précités notamment en ce que son système promoteur ne comporte pas de métal alcalin et qui permet d'obtenir une sélectivité en DMCS au moins semblable ou légèrement supérieure à celle obtenue avec les catalyseurs antérieurement connus ne comportant pas de métal alcalin dans leur système promoteur.

Un second but de la présente invention est de proposer un procédé et un nouveau catalyseur qui, après lui avoir ajouté un ou plusieurs additif(s) connu(s) comportant un métal alcalin du type de ceux décrits dans les brevets européens précités, permet alors d'obtenir au moins l'un des résultats avantageux suivants :

- une sélectivité en DMCS qui d'une part est toujours très supérieure à celle obtenue avec les catalyseurs antérieurement connus ne comportant pas de métal alcalin dans leur système promoteur, et d'autre part peut même être supérieure à celle obtenue avec les catalyseurs améliorés conformes à l'enseignement des brevets européens comportant un métal alcalcin dans leur système promoteur ;
- une sélectivité qui peut être maintenue à un haut niveau pour une température de réaction moins élevée ;
- une teneur pondérale en sous-produits lourds qui d'une part est toujours inférieure à celle obtenue avec les catalyseurs antérieurement connus possédant un système promoteur sans métal alcalin, et d'autre part peut même être inférieure à celle obtenue avec des catalyseurs améliorés possédant un système promoteur comportant un métal alcalin.

Ces buts et d'autres qui apparaîtront dans la suite du présent mémoire sont atteints par la présente invention. Plus précisément la présente invention, dans un premier mode de réalisation qui permet d'atteindre le premier but dont on a parlé ci-avant, concerne un procédé de fabrication de diméthyldichlorosilane par réaction de chlorure de méthyle sur une masse de contact solide formée de silicium et d'un catalyseur comportant ($\alpha$) du cuivre métallique ou un composé à base de cuivre et ($\beta$) un système promoteur comprenant :

- 10 à 1 000 ppm (calculés en poids d'étain et/ou d'antimoine métal par rapport à la masse de silicium engagée) d'un additif $\beta_1$ consistant dans au moins un métal choisi parmi l'étain et l'antimoine ou d'au moins un composé à base d'étain et/ou d'antimoine,
- 0 à 3 % en poids (calculés en zinc métal par rapport à la masse de silicium engagée) d'un additif facultatif $\beta_2$ consistant dans le zinc métallique ou un composé à base de zinc,

ledit procédé étant caractérisé en ce que le système promoteur ($\beta$) contient en outre 0,01 à 2 % en poids (calculés en lanthanide métallique par rapport à la masse de silicium engagée) d'un additif complémentaire $\beta_3$ consistant dans au moins un composé à base de lanthanide.

Le catalyseur peut être utilisé à une teneur pondérale de 1 à 30 %, de préférence de 5 à 12 % par rapport au poids total de la masse de contact (calculé à partir du poids réel des constituants).

Le catalyseur peut être incorporé au silicium sous forme d'un alliage ou bien sous forme d'un mélange mécanique.

A côté du cuivre, on peut utiliser comme composé à base de cuivre notamment un halogénure de cuivre, un oxyde de cuivre, par exemple CuO et $Cu_2O$ comme décrit dans le brevet US-A-2 464 033.

On préfère utiliser un halogénure de cuivre et dans ce contexte on retiendra le chlorure cuivrique ou le chlorure cuivreux. On a en effet mis en évidence, conformément à la présente invention, que l'on obtient de meilleurs résultats notamment en sélectivité et en taux de transformation de silicium si on introduit le cuivre sous forme de chlorure cuivreux ou cuivrique.

La partie cuivre (α) du catalyseur peut être présente à teneur pondérale comprise entre 0,1 et 20 % et, de préférence, entre 1 et 10 % en poids (calculés en cuivre métal par rapport à la masse de silicium engagée).

La teneur pondérale en étain et/ou antimoine ou en composé à base d'étain et/ou d'antimoine (calculée en étain et/ou antimoine métal) est comprise entre 10 et 1 000 ppm et, de préférence, entre 20 et 200 ppm par rapport à la masse de silicium engagée.

Il est nécessaire d'avoir au moins 10 ppm d'étain et/ou d'antimoine. On a en effet mis en évidence conformément à l'invention que les effets bénéfiques du composé à base de lanthanide ne sont obtenus qu'en présence d'étain et/ou d'antimoine. En outre une teneur pondérale supérieure à 1 000 ppm aurait un effet néfaste sur la réaction et notamment sur la sélectivité. L'étain qui est le métal préféré peut être ajouté sous forme de bronze ou sous forme d'un composé à base d'étain par exemple de chlorure d'étain.

Le zinc, quand on choisit de l'utiliser, est présent à une teneur pondérale comprise entre 0,1 et 3 % et, de préférence, entre 0,2 et 1 % en poids (calculés en zinc métal par rapport au poids de la masse de silicium). Jusqu'à 90 % en poids du zinc et de préférence jusqu'à 50 % du zinc peut être remplacé par un autre métal qui catalyse la chloration du cuivre et/ou qui forme un eutectique ou une phase à bas point de fusion avec les sels de cuivre. Comme métal pouvant convenir on peut citer l'aluminium, le cadmium, le manganèse, le nickel et l'argent.

Dans le présent texte on appellera lanthanide, les métaux de la classification périodique des éléments ayant les numéros atomiques allant de 57 à 71 ainsi que l'yttrium qui possède des propriétés voisines bien qu'ayant un numéro atomique de 39.

L'expression "composé à base de lanthanide" donnée ci-avant signifie :

- un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium, et yttrium ; l'expression "au moins un composé à base de lanthanide" signifie alors que l'on peut engager, outre un seul dérivé, un mélange de dérivés organiques ou un mélange de dérivés inorganiques ou un mélange de dérivés organiques et inorganiques de l'un quelconque des lanthanides précités ;
- un mélange de dérivés organiques et/ou inorganiques de plusieurs de ces lanthanides ; l'expression "au moins un composé à base de lanthanide" signifie que l'on peut engager, outre un seul mélange, une association de plusieurs mélanges de ce type.

En général, en raison des quantités relatives des composés des divers lanthanides dans les minerais les plus courants, notamment dans la monazite et la bastnaesite, lorsque l'on met en oeuvre un dérivé d'un seul lanthanide, ce dernier est de préférence le cérium, le lanthane, le praséodyme et le néodyme. Le cérium et le lanthane sont, parmi ces métaux, les plus abondants et conviennent tout particulièrement bien.

Des mélanges de dérivés de plusieurs lanthanides peuvent aussi être utilisés. Il peut en effet être avantageux de ne pas procéder à la séparation longue et coûteuse de tous les lanthanides présents en relativement faibles quantités dans les minerais couramment traités. En pareil cas, on fait appel généralement aux mélanges suivants :

- mélange de dérivés du cérium et d'un ou plusieurs des autres lanthanides ;
- mélange de dérivés de lanthane et d'un ou plusieurs autres lanthanides choisis parmi le praséodyme, le néodyme, le prométhium, le samarium, l'europium, le gadolinium, le terbium, le dysprosium, l'holmium, l'erbium, l'ytterbium, le thulium, le lutétium et l'yttrium ;
- mélange de dérivés du praséodyme et d'un ou plusieurs autres lanthanides choisis parmi le néodyme, le prométhium, le samarium, l'europium, le gadolinium, le terbium, le dysprosium, l'olmium, l'erbium, l'ytterbium, le thulium, le lutétium et l'yttrium ;
- le mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium et l'yttrium.

Quand de tels mélanges de dérivés de plusieurs lanthanides sont mis en oeuvre dans le procédé selon l'invention, le cérium et/ou le lanthane et/ou le praséodyme et/ou le néodyme représentent généralement au moins 40 % en moles du total des lanthanides.

A noter que les définitions générales données ci-avant dans le cadre des lanthanides à propos des expressions "composé à base de" et "au moins un composé à base de" s'appliquent également aux mêmes expressions qui sont données à propos des composés à base de cuivre, d'étain, d'antimoine ou de zinc dont on a parlé ci-avant.

Comme dérivés organiques de lanthanide qui conviennent bien, on entend plus particulièrement les sels dans lesquels le cation lanthanide est lié à un anion organique appartenant aux types suivants : carboxylate issu d'un acide carboxylique aliphatique et/ou aromatique ayant de 2 à 20 atomes de carbone tel que par exemple acétate, propionate, acrylate, méthacrylate, gluconate, lactate, benzoate ; organosulfonate issu d'un acide organosulfonique dont la partie organique qui peut être aliphatique et/ou aromatique comporte de 1 à 14 atomes de carbone ; organophosphonate issu d'un acide organophosphonique dont la partie organique qui peut être aliphatique et/ou aromatique comporte de 1 à 14 atomes de carbone.

Comme dérivés inorganiques de lanthanide qui conviennent bien, on entend plus particulièrement les sels dans lesquels le cation lanthanide est lié à un anion inorganique appartenant aux types suivants : nitrate, chlorure, bromure, iodure, sulfate, sulfonate, perchlorate, phosphate, pyrophosphate, phosphite, sélénate, vanadate ou tungstate.

Dans les dérivés de lanthanide utilisés dans le procédé selon l'invention, le lanthanide peut se trouver aux différents degrés d'oxydation qu'il possède éventuellement, le plus frequemment il se trouve au degré d'oxydation III ou IV.

Conformément à une modalité de mise en oeuvre préférentielle du procédé de l'invention, prise dans son premier mode de réalisation, on utilise comme additif $\beta_3$, l'espèce $\beta_{3.1}$ consistant dans au moins un halogénure de lanthane III, de cérium III ou de cérium IV. Plus préférentiellement encore on choisira l'additif $\beta_{3.2}$ consistant dans le chlorure de lanthane III et/ou le chlorure de cérium III.

La quantité de composé(s) à base de lanthanide mise en oeuvre est comprise entre 0,01 et 2 % en poids (calculés en lanthanide métallique par rapport à la masse de silicium engagée). De préférence cette quantité est comprise entre 0,03 et 1 % en poids. Au-dessous de 0,01 % l'action du lanthanide n'est pas vraiment décelable et au-dessus de 2 % le lanthanide a un effet poison qui abaisse la sélectivité.

Selon un second mode de réalisation qui permet d'atteindre le second but dont on a parlé ci-avant dans le préambule de ce mémoire, la présente invention concerne un procédé de fabrication de diméthyldichlorosilane par réaction de chlorure de méthyle sur une masse de contact solide formée de silicium et d'un catalyseur comportant ($\alpha$) du cuivre métallique ou un composé à base de cuivre et ($\beta$) un système promoteur comprenant :

- 10 à 1 000 ppm (calculés en poids d'étain et/ou d'antimoine métal par rapport à la masse de silicium engagée) d'un additif $\beta_1$ consistant dans au moins un métal choisi parmi l'étain et l'antimoine ou d'au moins un composé à base d'étain et/ou d'antimoine,
- 0 à 3 % en poids (calculés en zinc métal par rapport à la masse de silicium engagée) d'un additif facultatif $\beta_2$ consistant dans le zinc métallique ou un composé à base de zinc,

ledit procédé étant caractérisé en ce que le système promoteur ($\beta$) contient en outre les additifs suivants :

- 0,01 à 2 % en poids (calculés en lanthanide métallique par rapport à la masse de silicium engagée) d'un premier additif complémentaire $\beta_3$ consistant dans au moins un composé à base de lanthanide, et
- 0,05 à 2 % en poids (calculés en alcalin métal par rapport à la masse de silicium engagée) d'un second additif complémentaire $\beta_4$ consistant dans au moins un métal alcalin choisi parmi le lithium, le sodium, le potassium, le rubidium et le césium ou au moins un composé à base d'un même métal alcalin ou d'un mélange de mêmes métaux alcalins.

Les définitions générales et préférentielles qui concernent la partie cuivre ($\alpha$) du catalyseur ainsi que les additifs $\beta_1$, $\beta_2$, $\beta_3$ du système promoteur ($\beta$), sont les mêmes que celles mentionnées ci-avant à propos de la description du procédé de l'invention prise dans son premier mode de réalisation.

Comme additifs $\beta_4$ qui conviennent, on utilise, outre les métaux purs, les halogénures comme les chlorures.

Conformément à une modalité préférentielle de mise en oeuvre de l'invention, prise dans son second mode de réalisation, le système promoteur ($\beta$) comprend le couple $\beta_{3.1}$ + $\beta_{4.1}$ dans lequel :

- $\beta_{3.1}$ consiste dans au moins un halogénure de lanthane III, de cérium III ou de cérium IV, et
- $\beta_{4.1}$ consiste dans au moins un métal alcalin choisi parmi le potassium et le césium ou au moins un halogénure dérivé des métaux précités.

Conformément à une modalité encore plus préférentielle de mise en oeuvre de l'invention, le système promoteur ($\beta$) comprend le couple $\beta_{3.2}$ + $\beta_{4.2}$ dans lequel :

- $\beta_{3.2}$ consiste dans le chlorure de lanthane III et/ou le chlorure de cérium III,

- $\beta_{4.2}$ consiste dans le chlorure de césium.

Conformément à une autre modalité plus préférentielle, le système promoteur ($\beta$) comprend le couple $\beta_{3.2}$ + $\beta_{4.3}$ dans lequel $\beta_{3.2}$ possède la signification donnée ci-avant et $\beta_{4.3}$ consiste dans le chlorure de potassium.

Conformément encore à une autre modalité plus préférentielle, le système promoteur ($\beta$) comprend le couple $\beta_{3.2}$ + $\beta_{4.4}$ dans lequel $\beta_{3.2}$ possède la signification donnée ci-avant et $\beta_{4.4}$ consiste dans un mélange de chlorures de césium et de potassium.

Chaque additif du système promoteur ($\beta$) peut être associé aux autres additifs ou constituants de la masse de contact par un mélange mécanique permettant d'établir un contact intime entre les constituants. On a mis en évidence, conformément à la présente invention prise dans son second mode de réalisation, que l'on pouvait augmenter notamment la sélectivité en DMCS de manière très sensible, si les couples d'additifs $\beta_{3.1}$ + $\beta_{4.1}$ pris sous forme d'halogénure, $\beta_{3.2}$ + $\beta_{4.2}$, $\beta_{3.2}$ + $\beta_{4.3}$ et $\beta_{3.2}$ + $\beta_{4.4}$ sont mis en oeuvre directement sous forme d'un sel mixte, hydraté ou non, préparé au préalable qui peut être soit un composé ayant une formule chimique parfaitement définie, soit une association consistant dans un mélange eutectique ou un mélange proche ou éloigné par sa composition d'un mélange eutectique.

Conformément à une modalité de mise en oeuvre tout spécialement préférentielle de l'invention, prise dans son second mode de réalisation, qui offre la possibilité d'atteindre effectivement et pour la première fois une sélectivité en DMCS aussi élevée que 0,030, on utilise les chlorures mixtes, pris sous forme anhyde ou sous forme hydratée avec une ou plusieurs molécules d'eau, choisis parmi les espèces suivantes : $Cs_3LaCl_6$, $Cs_3CeCl_6$, $KLa_2Cl_7$, $KLa_3Cl_{10}$, $K_2LaCl_5$, $K_3LaCl_6$, $K_2CeCl_5$, $K_3Ce_2Cl_9$, $Cs_{1,5}K_{1,5}LaCl_6$ et les associations de CsCl ou de KCl avec $LaCl_3$ ou $CeCl_3$ renfermant 5 à 95 % en poids de chlorure de métal alcalin.

Ces chlorures mixtes sont des sels connus. Plusieurs modes opératoires sont possibles qui conduisent à des résultats équivalents ; on peut par exemple préparer ces sels mixtes par mélange en solution (eau ou tout autre solvant) des quantités nécessaires de chlorure de lanthanide et de chlorure alcalin, mais on peut opérer également en voie fondue (cf. notamment G.N. PAPATHEODOROV, Inorg. Nucl. Chem Letters, vol. 11, page 483, 1975).

La quantité de composé(s) à base de lanthanide $\beta_3$ et celle indiquée ci-avant à propos du premier mode de réalisation de l'invention. Ainsi elle est comprise entre 0,01 et 2 % en poids et, de préférence, entre 0,03 et 1 % en poids (calculés en lanthanide métallique par rapport à la masse de silicium).

S'agissant de la teneur pondérale en métal alcalin ou en composé(s) à base de métal alcalin $\beta_4$, elle est comprise entre 0,05 et 2 % en poids (calculés en alcalin métal par rapport à la même référence). De préférence, on utilise des quantités comprises entre 0,1 et 1,5 % en poids. Au-dessous de 0,05 % l'action du métal alcalin n'est pas vraiment décelable et au-dessus de 2 % en poids, le métal alcalin a un effet poison.

De manière plus préférentielle, les quantités des additifs lanthanide $\beta_3$ et alcalin $\beta_4$ sont choisies à l'intérieur des zones de variation générale et préférée précitées de manière à ce que le rapport :

$$\frac{\text{poids d'alcalin métal}}{\text{poids de lanthanide métal}}$$

varie de 0,05 à 100 et, de préférence de 0,1 à 20.

Pour le reste, il est souhaitable que la dimension particulaire du silicium soit telle que le diamètre d'au moins 50 % en poids des particules soit compris entre 10 et 500 $\mu$m.

De même le catalyseur se trouve également sous forme de particules dont le diamètre moyen est avantageusement compris entre 1 et 100 $\mu$m. Dans ces conditions de granulométrie de la masse contact on peut mettre en oeuvre la réaction de synthèse directe avec une masse de contact sous forme d'un lit fluidisé.

Le procédé de synthèse directe selon l'invention peut être mis en oeuvre de façon générale dans un des trois types d'appareillages suivants : un réacteur du type à lit agité comme celui décrit dans le brevet des Etats-Unis d'Amérique US-A-2 449 821, un réacteur du type à lit fluidisé comme celui décrit dans le brevet des Etats-Unis d'Amérique US-A-2 389 931 ou dans un four rotatif.

Le catalyseur peut être également utilisé déposé sur une matière minérale en particules comme le sable, la silice broyée, le gel de silice, l'alumine, la brique réfractaire broyée, les catalyseurs pour le craquage du pétrole, des zéolites et des argiles calcinées comme décrit dans le brevet français FR-A-1 545 407.

La réaction a lieu à une température comprise entre 280 et 450 °C, en particulier entre 290 et 370 °C.

On peut réaliser la réaction directement à la température choisie sans amorçage de la réaction à température plus élevée en particulier quand la température de réaction choisie est de l'ordre de 330 °C.

Si l'on effectue la réaction à une température inférieure à 330 °C il est souhaitable d'amorcer la réaction pendant quelques dizaines de minutes à 1 heure ou davantage à une température supérieure à 330 °C.

D'autres avantages et caractéristiques de la présente invention apparaîtront à la lecture des exemples suivants donnés à titre illustratif nullement limitatif.

Dans les exemples suivants, sauf mention contraire, on utilise un réacteur pilote cylindrique de diamètre intérieur 60 mm et de hauteur : 250 mm muni à sa base d'un distributeur de gaz en verre fritté. Le silicium et le catalyseur sont chargés sous forme d'une poudre dont la taille moyenne d'au moins 50 % des particules est comprise entre 60 et 200 $\mu$m.

La réaction s'effectue en lit agité et le réacteur est muni d'un élément chauffant extérieur.

- EXEMPLE 1 :

Système catalytique CuCl/Sn/ZnCl$_2$/LaCl$_3$ à 315 °C :

Dans un réacteur vertical, cylindrique (diamètre : 60 mm) en verre, muni d'un agitateur métallique et d'un distributeur de gaz en verre fritté, on charge une masse de contact en poudre composée de :
- silicium : 210 g,
- CuCl : 16,3 g (soit 5 % de Cu métal par rapport au Si),
- bronze à 10 % en poids de Sn : 0,38 g (soit 0,018 % de Sn métal par rapport au Si),
- ZnCl$_2$ : 1,60 g (soit 0,37 % de Zn métal par rapport au Si), et
- LaCl$_3$, 6H$_2$O : 0,68 g (soit 0,13 % de La métal par rapport au Si).

On chauffe progressivement le réacteur jusqu'à 200 °C sous un courant d'azote. Puis, en continuant d'élever la température du réacteur, on ferme le robinet d'azote et on commence à introduire le chlorure de méthyle avec un débit (mesuré à 20 °C) de : 16 l/h.

Après une étape d'amorçage à 345 °C pendant 1 heure, la température de réaction est ramenée à 315 °C pour toute la durée de l'expérience.

Les chlorosilanes produits sont prélevés et analysés régulièrement par chromatographie en phase vapeur. Les résultats donnés ci-après prennent en compte tous les chlorosilanes qui sont produits entre le taux de transformation du silicium chargé (TTSi) égal à zéro et le taux de transformation indiqué ci-après. Les chlorosilanes produits pendant la phase d'amorçage sont donc inclus dans les résultats donnés.

Dans cet exemple, comme dans les exemples qui suivent, dans un esprit d'homogénéité, tous les résultats sont donnés pour TTSi se situant dans la zone 55-60 % ; mais il doit être entendu que la réaction peut être poursuivie au-delà et atteindre une valeur maximale de TTSi aussi élevée que celles allant de 70 à 88 %.

Après avoir consommé 56 % du silicium engagé (TTSi = 56 %), cet exemple donne les résultats suivants :

```
- Productivité (g de MCS/h/kg de Si)          : 129
- Composition % molaires par rapport à la
  totalité des silanes obtenus en :
    . (CH3)2SiCl2 ou DMCS                       :  87,6
    . CH3SiSl3    ou MTCS                       :   5,2
    . (CH3)3SiCl  ou TMCS                       :   2,8
- Sélectivité : rapport pondéral moyen
  MTCS
  DMCS                                          :   0,069
  - % en poids de lourds par rapport au
    méthylchlorosilane (MCS) obtenus            :   4,6
```

- ESSAI COMPARATIF 1 :

Système catalytique : CuCl/Sn/ZnCl$_2$ à 300 °C :

On met en oeuvre le procédé selon le mode opératoire de l'exemple 1 que l'on modifie en n'utilisant pas cette fois de chlorure de lanthane III.

On obtient les résultats suivants pour un TTSi de 56 % :

| - productivité | 141 |
|---|---|
| - composition : | |
| . DMCS | 87,2 |
| . MTCS | 5,7 |
| . TMCS | 2,9 |
| - sélectivité | 0,076 |
| - % lourds | 4,7 |

- EXEMPLE 2 :

Système catalytique : CuCl/Sn/ZnCl$_2$/Cs$_3$LaCl$_6$ à 315 °C :

On met en oeuvre le procédé selon le mode opératoire de l'exemple 1 que l'on modifie en remplaçant dans la masse de contact les 0,68 g de LaCl$_3$,6H$_2$O par 1,58 g du chlorure mixte de césium et de lanthane III de formule Cs$_3$LaCl$_6$ (soit 0,39 % de Cs métal et 0,13 % de La métal par rapport au Si ; avec un rapport pondéral :
Cs métal/La métal = 3).

Le chlorure mixte Cs$_3$LaCl$_6$ a été préparé par mise en solution aqueuse des quantités adéquates de CsCl et de LaCl$_3$, suivie d'une évaporation lente du solvant à 65 °C sous 30.10$^2$ Pa et d'un séchage du solide blanc obtenu à l'étuve à 120 °C.

On obtient les résultats suivants pour un TTSi de 59 % :

| - productivité | 125 |
|---|---|
| - composition : | |
| . DMCS | 94,3 |
| . MTCS | 2,4 |
| . TMCS | 1,5 |
| - sélectivité | 0,030 |
| - % lourds | 1,8 |

- <u>ESSAI COMPARATIF 2</u> :

Système catalytique : $CuCl/Sn/ZnCl_2/CsCl$ à 315 °C :

On met en oeuvre le procédé selon le mode opératoire de l'exemple 2 que l'on modifie en remplaçant dans la masse de contact les 1,58 g de $Cs_3LaCl_6$ par 1,063 g de CsCl (soit 0,39 % de Cs métal par rapport au Si).

On obtient les résultats suivants pour TTSi de 59 % :

| - productivité | 139 |
|---|---|
| - composition : | |
| . DMCS | 92,9 |
| . MTCS | 3,0 |
| . TMCS | 2,0 |
| - sélectivité | 0,037 |
| - % lourds | 2,4 |

- <u>EXEMPLE 3</u> :

Système catalytique : $CuCl/Sn/ZnCl_2/Cs_{1,5}K_{1,5}LaCl_6$ à 315 °C :

On met en oeuvre le procédé selon le mode opératoire de l'exemple 2 que l'on modifie en remplaçant dans la masse de contact les 1,58 g de $Cs_3LaCl_6$ par 2,4 g du chlorure mixte de césium, de potassium et de lanthane III de formule $Cs_{1,5}K_{1,5}LaCl_6$ (soit 0,37 % de Cs métal 0,11 % de K métal et 0,26 % de La métal par rapport au Si ; avec un rapport pondéral : alcalins métaux/La métal = 1,85).

Ce chlorure mixte a été préparé par la voie solution selon le mode opératoire indiqué dans l'exemple 2.

On obtient les résultats suivants pour TTSi de 57 % :

| - productivité | 133 |
|---|---|
| - composition : | |
| . DMCS | 93,7 |
| . MTCS | 2,5 |
| . TMCS | 1,6 |
| - sélectivité | 0,031 |
| - % lourds | 2,5 |

- EXEMPLE 4 :

Système catalytique : $CuCl/Sn/ZnCl_2/K_3LaCl_6$ à 315 °C :

On met en oeuvre le procédé selon le mode opératoire de l'exemple 2 que l'on modifie en remplaçant dans la masse de contact les 1,58 g de $Cs_3LaCl_6$ par 1,69 g du chlorure mixte de potassium et de lanthane III de formule $K_3LaCl_6$ (soit 0,2 % de K métal, 0,24 % de La métal par rapport au Si ; avec un rapport pondéral : K métal/La métal = 0,833).

On obtient les résultats suivants pour TTSi de 58 % :

| | |
|---|---|
| - productivité | 121 |
| - composition : | |
| . DMCS | 93,6 |
| . MTCS | 2,8 |
| . TMCS | 1,7 |
| - sélectivité | 0,035 |
| - % lourds | 1,8 |

- ESSAI COMPARATIF 3 :

Système catalytique : $CuCl/Sn/ZnCl_2/KCl$ à 315 °C :

On met en oeuvre le procédé selon le mode opératoire de l'exemple 4 que l'on modifie en remplaçant dans la masse de contact les 1,69 g de sel mixte $K_3LaCl_6$ par 0,81 g deKCl (soit 0,2 % de K métal par rapport au Si).

On obtient les résultats suivants pour TTSi de 59 % :

| | |
|---|---|
| - productivité | 151 |
| - composition : | |
| . DMCS | 90,6 |
| . MTCS | 3,8 |
| . TMCS | 2,7 |
| - sélectivité | 0,049 |
| - % lourds | 3,5 |

- EXEMPLES 5 ET 6 :

On met en oeuvre la réaction de la même façon que dans l'exemple 2, sauf que l'on modifie la composition de la masse de contact (exemples 5 et 6) et la température (exemple 6).

S'agissant de la masse de contact, on utilise la composition décrite dans l'exemple 2 que l'on modifie en remplaçant les 1,58 g de $Cs_3LaCl_6$ par 1,22 g d'un mélange eutectique de chlorure de césium et de chlorure de lanthane III renfermant 87,7 % en poids de CsCl et 12,3 % en poids de $LaCl_3$ (soit 0,4 % de Cs métal et 0,04 % de La métal par rapport au Si ; avec un rapport pondéral : Cs métal/La métal = 10).

Les résultats sont rassemblés dans le tableau suivant :

EP 0 470 020 B1

| EXEMPLE | | 5 | 6 |
|---|---|---|---|
| Température (°C) | amorçage | 345 | 345 |
| | réaction | 315 | 300 |
| TTSi (%) | | 58 | 58 |
| Productivité | | 154 | 134 |
| Composition : | DMCS | 92,6 | 92,7 |
| | MTCS | 2,9 | 2,7 |
| | TMCS | 1,9 | 1,9 |
| Sélectivité | | 0,036 | 0,034 |
| % lourds | | 3,0 | 3,4 |

- EXEMPLE 7 :

Système catalytique : $CuCl/Sn/ZnCl_2/Cs_3CeCl_6$ à 315 °C :

On met en oeuvre le procédé selon le mode opératoire de l'exemple 2 que l'on modifie en remplaçant dans la masse de contact les 1,58 g de $Cs_3LaCl_6$ par 1,58 g de chlorure mixte de césium et de cérium III de formule $Cs_3CeCl_6$ (soit 0,4 % de Cs métal et 0,14 % de Ce métal par rapport au Si ; avec un rapport pondéral : Cs métal/Ce métal = 2,85).

Le chlorure mixte a été préparé par la voie solution selon le mode opératoire indiqué dans l'exemple 2 en opérant l'évaporation à une température d'environ 40 °C.

On obtient les résultats suivants pour TTSi de 57 % :

| - productivité | 148 |
|---|---|
| - composition : | |
| . DMCS | 91,6 |
| . MTCS | 3,0 |
| . TMCS | 2,1 |
| - sélectivité | 0,038 |

**Revendications**

1. Procédé de fabrication de diméthyldichlorosilane par réaction de chlorure de méthyle sur une masse de contact solide formée de silicium et d'un catalyseur comportant ($\alpha$) du cuivre métallique ou un composé à base de cuivre et ($\beta$) un système promoteur comprenant :
   - 10 à 1 000 ppm (calculés en poids d'étain et/ou d'antimoine métal par rapport à la masse de silicium engagée) d'un additif $\beta_1$ consistant dans au moins un métal choisi parmi l'étain et l'antimoine ou d'au moins un composé à base d'étain et/ou d'antimoine,
   - 0 à 3 % en poids (calculés en zinc métal par rapport à la masse de silicium engagée) d'un additif facultatif $\beta_2$ consistant dans le zinc métallique ou un composé à base de zinc,
   ledit procédé étant caractérisé en ce que le système promoteur ($\beta$) contient en outre 0,01 à 2 % en poids (calculés en lanthanide métallique par rapport à la masse de silicium engagée) d'un additif complémentaire $\beta_3$ consistant dans au moins un composé à base de lanthanide.

2. Procédé de fabrication de diméthyldichlorosilane par réaction de chlorure de méthyle sur une masse de contact solide formée de silicium et d'un catalyseur comportant ($\alpha$) du cuivre métallique ou un composé à base de cuivre et ($\beta$) un système promoteur comprenant :
   - 10 à 1 000 ppm (calculés en poids d'étain et/ou d'antimoine métal par rapport à la masse de silicium engagée) d'un additif $\beta_1$ consistant dans au moins un métal choisi parmi l'étain et l'antimoine ou d'au moins un composé à base d'étain et/ou d'antimoine,

11

- 0 à 3 % en poids (calculés en zinc métal par rapport à la masse de silicium engagée) d'un additif facultatif $\beta_2$ consistant dans le zinc métallique ou un composé à base de zinc,

ledit procédé étant caractérisé en ce que le système promoteur ($\beta$) contient en outre les additifs suivants :

- 0,01 à 2 % en poids (calculés en lanthanide métallique par rapport à la masse de silicium engagée) d'un premier additif complémentaire $\beta_3$ consistant dans au moins un composé à base de lanthanide, et
- 0,05 à 2 % en poids (calculés en alcalin métal par rapport à la masse de silicium engagée) d'un second additif complémentaire $\beta_4$ consistant dans au moins un métal alcalin choisi parmi le lithium, le sodium, le potassium, le rubidium et le césium ou au moins un composé à base d'un même métal alcalin ou d'un mélange de mêmes métaux alcalins.

3. Procédé selon la revendication 1 ou 2, caractérisé en ce que la quantité d'additif $\beta_1$ est compris entre 20 et 200 ppm.

4. Procédé selon l'une quelconque des revendications 1 à 3, caractérisé en ce que la quantité d'additif $\beta_2$, quand on en utilise un, est comprise entre 0,2 et 1 %.

5. Procédé selon l'une quelconque des revendications 1 à 4, caractérisé en ce que la partie ($\alpha$) du catalyseur est choisie parmi le chlorure cuivreux et le chlorure cuivrique.

6. Procédé selon l'une quelconque des revendications 1 à 5, caractérisé en ce que la réaction est mise en oeuvre dans un réacteur choisi parmi un réacteur à lit agité, un réacteur à lit fluidisé, et un four rotatif.

7. Procédé selon l'une quelconque des revendications 1 et 3 à 6, caractérisé en ce que l'on utilise comme additif $\beta_3$, l'espèce $\beta_{3.1}$ consistant dans au moins un halogénure de lanthane III, de cérium III ou de cérium IV.

8. Procédé selon la revendication 7, caractérisé en ce que l'on utilise l'additif $\beta_{3.2}$ consistant dans le chlorure de lanthane III et/ou le chlorure de cérium III.

9. Procédé selon l'une quelconque des revendications 1 et 3 à 8, caractérisé en ce que la quantité d'additif $\beta_3$ est comprise entre 0,03 et 1 %.

10. Procédé selon l'une quelconque des revendications 2 à 6, caractérisé en ce que le système promoteur ($\beta$) comprend le couple $\beta_{3.1}$ + $\beta_{4.1}$ dans lequel :
    - $\beta_{3.1}$ consiste dans au moins un halogénure de lanthane III, de cérium III ou de cérium IV, et
    - $\beta_{4.1}$ consiste dans au moins un métal alcalin choisi parmi le potassium et le césium ou au moins un halogénure dérivé des métaux précités.

11. Procédé selon la revendication 10, caractérisé en ce que le système promoteur ($\beta$) comprend :
    * le couple $\beta_{3.2}$ + $\beta_{4.2}$ dans lequel :
      - $\beta_{3.2}$ consiste dans le chlorure de lanthane III et/ou le chlorure de cérium III,
      - $\beta_{4.2}$ consiste dans le chlorure de césium,
    * ou le couple $\beta_{3.2}$ + $\beta_{4.3}$ dans lequel $\beta_{3.2}$ possède la signification donnée ci-avant et $\beta_{4.3}$ consiste dans le chlorure de potassium,
    * ou le couple $\beta_{3.2}$ + $\beta_{4.4}$ dans lequel $\beta_{3.2}$ possède la signification donnée ci-avant et $\beta_{4.4}$ consiste dans un mélange de chlorures de césium et de potassium.

12. Procédé selon la revendication 10 ou 11, caractérisé en ce que les couples d'additifs $\beta_{3.1}$ + $\beta_{4.1}$ pris sous forme d'halogénure, $\beta_{3.2}$ + $\beta_{4.2}$, $\beta_{3.2}$ + $\beta_{4.3}$ et $\beta_{3.2}$ + $\beta_{4.4}$ sont mis en oeuvre directement sous forme d'un sel mixte, hydraté ou non, préparé au préalable qui peut être soit un composé ayant une formule chimique parfaitement définie, soit une association consistant dans un mélange eutectique ou un mélange proche ou éloigné par sa composition d'un mélange eutectique.

13. Procédé selon la revendication 12, caractérisé en ce que l'on utilise les chlorures mixtes, pris sous forme anhydre ou sous forme hydratée avec une ou plusieurs molécules d'eau, choisis parmi les

EP 0 470 020 B1

espèces suivantes : $Cs_3LaCl_6$, $Cs_3CeCl_6$, $KLa_2Cl_7$, $KLa_3Cl_{10}$, $K_2LaCl_5$, $K_3LaCl_6$, $K_2CeCl_5$, $K_3Ce_2Cl_9$, $Cs_{1,5}K_{1,5}LaCl_6$ et les associations de CsCl ou de KCl avec $LaCl_3$ ou $CeCl_3$ renfermant 5 à 95 % en poids de chlorure de métal alcalin.

14. Procédé selon l'une quelconque des revendications 2 à 13, caractérisé en ce que d'une part la quantité d'additif $\beta_3$ est comprise entre 0,03 et 1 % et d'autre part la quantité d'additif $\beta_4$ est comprise entre 0,1 et 1,5 %.

15. Procédé selon l'une quelconque des revendications 2 à 14, caractérisé en ce que le rapport :

$$\frac{\text{poids d'alcalin métal}}{\text{poids de lanthanide métal}}$$

varie de 0,05 à 100.

16. Procédé selon la revendication 15, caractérisé en ce que le rapport varie de 0,1 à 20.

17. A titre de moyen pour mettre en oeuvre un procédé de synthèse directe par réaction de chlorure de méthyle sur du silicium, un catalyseur, comportant ($\alpha$) du cuivre métallique ou un composé à base de cuivre et ($\beta$) un système promoteur, tel que défini dans l'une quelconque des revendications 1 à 16.

**Claims**

1. Process for the manufacture of dimethyldichlorosilane by reaction of methyl chloride with a solid contact mass formed of silicon and of a catalyst containing ($\alpha$) copper metal or a copper-based compound and ($\beta$) a promoter system comprising:
   - 10 to 1,000 ppm (calculated by weight of tin and/or of antimony metal relative to the mass of silicon employed) of an additive $\beta_1$ consisting of at least one metal chosen from tin and antimony or of at least one tin- and/or antimony-based compound,
   - 0 to 3% by weight (calculated as zinc metal relative to the mass of silicon employed) of an optional additive $\beta_2$ consisting of zinc metal or a zinc-based compound,
   the said process being characterized in that the promoter system ($\beta$) additionally contains 0.01 to 2% by weight (calculated as lanthanide metal relative to the mass of silicon employed) of a supplementary additive $\beta_3$ consisting of at least one lanthanide-based compound.

2. Process for the manufacture of dimethyldichlorosilane by reaction of methyl chloride with a solid contact mass formed of silicon and of a catalyst containing ($\alpha$) copper metal or a copper-based compound and ($\beta$) a promoter system comprising:
   - 10 to 1,000 ppm (calculated by weight of tin and/or antimony metal relative to the mass of silicon employed) of an additive $\beta_1$ consisting of at least one metal chosen from tin and antimony or of at least one tin- and/or antimony-based compound,
   - 0 to 3% by weight (calculated as zinc metal relative to the mass of silicon employed) of an optional additive $\beta_2$ consisting of zinc metal or a zinc-based compound,
   the said process being characterized in that the promoter system ($\beta$) additionally contains the following additives:
   - 0.01 to 2% by weight (calculated as lanthanide metal relative to the mass of silicon employed) of a first supplementary additive $\beta_3$ consisting of at least one lanthanide-based compound, and
   - 0.05 to 2% by weight (calculated as alkali metal relative to the mass of silicon employed) of a second supplementary additive $\beta_4$ consisting of at least one alkali metal chosen from lithium, sodium, potassium, rubidium and caesium or at least one compound based on the same alkali metal or on a mixture of the same alkali metals.

3. Process according to claim 1 or 2, characterized in that the amount of additive $\beta_1$ is between 20 and 200 ppm.

13

4. Process according to any one of claims 1 to 3, characterized in that the amount of additive $\beta_2$, when this is used, is between 0.2 and 1%.

5. Process according to any one of claims 1 to 4, characterized in that the part ($\alpha$) of the catalyst is chosen from cuprous chloride and cupric chloride.

6. Process according to any one of claims 1 to 5, characterized in that the reaction is carried out in a reactor chosen from a stirred bed reactor, a fluidized bed reactor and a rotating oven.

7. Process according to any one of claims 1 and 3 to 6, characterized in that the species $\beta_{3.1}$, consisting of at least one lanthanum (III), cerium (III) or cerium (IV) halide, is used as additive $\beta_3$.

8. Process according to claim 7, characterized in that the additive $\beta_{3.2}$, consisting of lanthanum (III) chloride and/or cerium (III) chloride, is used.

9. Process according to any one of claims 1 and 3 to 8, characterized in that the amount of additive $\beta_3$ is between 0.03 and 1%.

10. Process according to any one of claims 2 to 6, characterized in that the promoter system ($\beta$) comprises the pair $\beta_{3.1}$ + $\beta_{4.1}$ in which:
    - $\beta_{3.1}$ consists of at least one lanthanum (III), cerium (III) or cerium (IV) halide, and
    - $\beta_{4.1}$ consists of at least one alkali metal chosen from potassium and caesium or at least one halide derived from the abovementioned metals.

11. Process according to claim 10, characterized in that the promoter system ($\beta$) comprises:
    * the pair $\beta_{3.2}$ + $\beta_{4.2}$ in which:
        - $\beta_{3.2}$ consists of lanthanum (III) chloride and/or cerium (III) chloride,
        - $\beta_{4.2}$ consists of caesium chloride,
    * or the pair $\beta_{3.2}$ + $\beta_{4.3}$ in which $\beta_{3.2}$ has the meaning given above and $\beta_{4.3}$ consists of potassium chloride,
    * or the pair $\beta_{3.2}$ + $\beta_{4.4}$ in which $\beta_{3.2}$ has the meaning given above and $\beta_{4.4}$ consists of a mixture of caesium and potassium chlorides.

12. Process according to claim 10 or 11, characterized in that the pairs of additives $\beta_{3.1}$ + $\beta_{4.1}$ taken in halide form, $\beta_{3.2}$ + $\beta_{4.2}$, $\beta_{3.2}$ + $\beta_{4.3}$ and $\beta_{3.2}$ + $\beta_{4.4}$ are used directly in the form of a mixed salt, which may or may not be hydrated, prepared beforehand and which may be either a compound having an exactly defined chemical formula or a combination consisting of a eutectic mixture or a mixture which, in its composition, is close to or remote from a eutectic mixture.

13. Process according to claim 12, characterized in that mixed chlorides, taken in anhydrous form or in hydrated form with one or more water molecules, chosen from the following species are used: $Cs_3LaCl_6$, $Cs_3CeCl_6$, $KLa_2Cl_7$, $KLa_3Cl_{10}$, $K_2LaCl_5$, $K_3LaCl_6$, $K_2CeCl_5$, $K_3Ce_2Cl_9$ or $Cs_{1.5}K_{1.5}LaCl_6$ and the combinations of CsCl or of KCl with $LaCl_3$ or $CeCl_3$ containing 5 to 95% by weight of alkali metal chloride.

14. Process according to any one of claims 2 to 13, characterized in that, on the one hand, the amount of additive $\beta_3$ is between 0.03 and 1% and, on the other hand, the amount of additive $\beta_4$ is between 0.1 and 1.5%.

15. Process according to any one of claims 2 to 14, characterized in that the ratio:

$$\frac{\text{weight of alkali metal}}{\text{weight of lanthanide metal}}$$

varies from 0.05 to 100.

16. Process according to claim 15, characterized in that the ratio varies from 0.1 to 20.

17. As a means for implementing a direct synthesis process by reaction of methyl chloride with silicon, a catalyst containing ($\alpha$) copper metal or a copper-based compound and ($\beta$) a promoter system, as defined in any one of claims 1 to 16.

**Patentansprüche**

1. Verfahren zur Herstellung von Dimethyldichlorosilan durch Reaktion von Methylchlorid auf einer festen Kontaktmasse, die aus Silicium und einem Katalysator gebildet wird, der ($\alpha$) metallisches Kupfer oder eine Verbindung auf der Basis von Kupfer und ($\beta$) ein Promotor-System umfaßt, das seinerseits umfaßt:
   - 10 bis 1.000 ppm (berechnet in Gewicht von Zinnmetall und/oder Antimonmetall, bezogen auf die Masse des eingebrachten Siliciums) eines Additivs $\beta_1$, das aus mindestens einem Metall besteht, das unter Zinn und Antimon oder mindestens einer Verbindung auf der Basis von Zinn und/oder Antimon ausgewählt wird,
   - 0 bis 3 Gew.-% (berechnet in Zinkmetall, bezogen auf die Masse des eingebrachten Siliciums) eines wahlweisen Additivs $\beta_2$, das aus metallischem Zink oder einer Verbindung auf der Basis von Zink besteht,
   wobei das genannte Verfahren dadurch gekennzeichnet ist, daß das Promotor-System ($\beta$) außerdem 0,01 bis 2 Gew.-% (berechnet in metallischem Lanthanid, bezogen auf die Masse des eingebrachten Siliciums) eines zusätzlichen Additivs $\beta_3$ enthält, das aus mindestens einer Verbindung auf der Basis von Lanthanid besteht.

2. Verfahren zur Herstellung von Dimethyldichlorsilan durch Reaktion von Methylchlorid auf einer festen Kontaktmasse, die aus Silicium und einem Katalysator gebildet wird, der ($\alpha$) metallisches Kupfer oder eine Verbindung auf der Basis von Kupfer und ($\beta$) ein Promotor-System umfaßt, das seinerseits umfaßt:
   - 10 bis 1.000 ppm (berechnet in Gewicht von Zinnmetall und/oder Antimonmetall, bezogen auf die Masse des eingebrachten Siliciums) eines Additivs $\beta_1$, das aus mindestens einem Metall besteht, das unter Zinn und Antimon oder mindestens einer Verbindung auf der Basis von Zinn und/oder Antimon ausgewählt wird,
   - 0 bis 3 Gew.-% (berechnet in Zinkmetall, bezogen auf die Masse des eingebrachten Siliciums) eines wahlweisen Additivs $\beta_2$, das aus metallischem Zink oder einer Verbindung auf der Basis von Zink besteht,
   wobei das genannte Verfahren dadurch gekennzeichnet ist, daß das Promotor-System ($\beta$) außerdem die folgenden Additive enthält:
   - 0,01 bis 2 Gew.-% (berechnet in metallischem Lanthanid, bezogen auf die Masse des eingebrachten Siliciums) eines ersten zusätzlichen Additivs $\beta_3$, das aus mindestens einer Verbindung auf der Basis von Lanthanid besteht, und
   - 0,05 bis 2 Gew.-% (berechnet in Alkalimetall, bezogen auf die Masse des eingebrachten Siliciums) eines zweiten zusätzlichen Additivs $\beta_4$, das aus mindestens einem Alkalimetall besteht, das unter Lithium, Natrium, Kalium, Rubidium und Cäsium oder aus mindestens einer Verbindung auf der Basis des gleichen Alkalimetalls oder einer Mischung der gleichen Alkalimetalle ausgewählt wird.

3. Verfahren nach Anspruch 1 oder 2, dadurch gekennzeichnet, daß die Menge des Additivs $\beta_1$ zwischen 20 und 200 ppm beträgt.

4. Verfahren nach irgendeinem der Ansprüche 1 bis 3, dadurch gekennzeichnet, daß die Menge des Additivs $\beta_2$, wenn man dabei eines verwendet, zwischen 0,2 und 1 % beträgt.

5. Verfahren nach irgendeinem der Ansprüche 1 bis 4, dadurch gekennzeichnet, daß der Teil ($\alpha$) des Katalysators unter Kupfer(I)-chlorid und Kupfer(II)-chlorid ausgewählt wird.

6. Verfahren nach irgendeinem der Ansprüche 1 bis 5, dadurch gekennzeichnet, daß die Reaktion in einem Reaktor durchgeführt wird, der aus einem Reaktor mit bewegtem Bett, einem Reaktor mit fluidisiertem Bett und einem Drehofen ausgewählt wird.

7. Verfahren nach irgendeinem der Ansprüche 1 und 3 bis 6, dadurch gekennzeichnet, daß man als Additiv $\beta_3$ die Art $\beta_{3.1}$ verwendet, die aus mindestens einem Halogenid von Lanthan(III), Cer(III) oder Cer(IV) besteht.

8. Verfahren nach Anspruch 7, dadurch gekennzeichnet, daß man das Additiv $\beta_{3.2}$ verwendet, das aus Lanthan(III)-chlorid und/oder Cer(III)-chlorid besteht.

9. Verfahren nach irgendeinem der Ansprüche 1 und 3 bis 8, dadurch gekennzeichnet, daß die Menge des Additivs $\beta_3$ zwischen 0,03 und 1 % beträgt.

10. Verfahren nach irgendeinem der Ansprüche 2 bis 6, dadurch gekennzeichnet, daß das Promotor-System ($\beta$) das Paar $\beta_{3.1}$ + $\beta_{4.1}$ umfaßt, in dem
   - $\beta_{3.1}$ aus mindestens einem Halogenid von Lanthan(III), Cer(III) oder Cer(IV) besteht, und
   - $\beta_{4.1}$ aus mindestens einem Alkalimetall besteht, das aus Kalium und Cäsium oder aus mindestens einem von den genannten Metallen abgeleiteten Halogenid ausgewählt wird.

11. Verfahren nach Anspruch 10, dadurch gekennzeichnet, daß das Promotor-System ($\beta$) umfaßt:
   * das Paar $\beta_{3.2}$ + $\beta_{4.2}$, in dem
     - $\beta_{3.2}$ aus Lanthan(III)-chlorid und/oder Cer(III)-chlorid besteht,
     - $\beta_{4.2}$ aus Cäsiumchlorid besteht,
   * oder das Paar $\beta_{3.2}$ + $\beta_{4.3}$, in dem $\beta_{3.2}$ die vorstehend angegebene Bedeutung besitzt und $\beta_{4.3}$ aus Kaliumchlorid besteht,
   * oder das Paar $\beta_{3.2}$ + $\beta_{4.4}$, in dem $\beta_{3.2}$ die vorstehend angegebene Bedeutung besitzt und $\beta_{4.4}$ aus einer Mischung der Chloride von Cäsium und Kalium besteht.

12. Verfahren nach Anspruch 10 oder 11, dadurch gekennzeichnet, daß die Additiv-Paare $\beta_{3.1}$ + $\beta_{4.1}$ in Form der Halogenide verwendet und $\beta_{3.2}$ + $\beta_{4.2}$, $\beta_{3.2}$ + $\beta_{4.3}$ und $\beta_{3.2}$ + $\beta_{4.4}$ direkt in Form eines gemischten, hydratisierten oder nicht hydratisierten, zuvor hergestellten Salzes eingesetzt werden, das entweder eine Verbindung mit einer genau definierten chemischen Formel oder eine Assoziation sein kann, die aus einer eutektischen Mischung oder aus einer Mischung besteht, die in ihrer Zusammensetzung von einer eutektischen Mischung näher oder weiter entfernt ist.

13. Verfahren nach Anspruch 12, dadurch gekennzeichnet, daß man die gemischten Chloride verwendet, in wasserfreier Form oder in hydratisierter Form mit einem oder mehreren Molekülen Wasser, ausgewählt unter den folgenden Arten: $Cs_3LaCl_6$, $Cs_3CeCl_6$, $KLa_2Cl_7$, $KLa_3Cl_{10}$, $K_2LaCl_5$, $K_3LaCl_6$, $K_2CeCl_5$, $K_3Ce_2Cl_9$, $Cs_{1.5}K_{1.5}LaCl_6$ und die Assoziationen von CsCl und KCl mit $LaCl_3$ oder $CeCl_3$, die 5 bis 95 Gew.-% Alkalimetall-chlorid umfassen.

14. Verfahren nach irgendeinem der Ansprüche 2 bis 13, dadurch gekennzeichnet, daß einerseits die Menge an Additiv $\beta_3$ zwischen 0,03 und 1 % und andererseits die Menge an Additiv $\beta_4$ zwischen 0,1 und 1,5 % betragen.

15. Verfahren nach irgendeinem der Ansprüche 2 bis 14, dadurch gekennzeichnet, daß das Verhältnis

$$\frac{\text{Gewicht Alkalimetall}}{\text{Gewicht Lanthanidmetall}}$$

zwischen 0,05 und 100 variiert.

16. Verfahren nach Anspruch 15, dadurch gekennzeichnet, daß das Verhältnis zwischen 0,1 und 20 variiert.

17. Als Mittel zur Durchführung eines Verfahrens zur direkten Synthese durch Reaktion von Methylchlorid mit Silicium ein Katalysator, der ($\alpha$) metallisches Kupfer oder eine Verbindung auf der Basis von Kupfer und ($\beta$) ein Promotor-System wie in irgendeinem der Ansprüche 1 bis 16 definiert umfaßt.